# EUROPÄISCHE PATENTSCHRIFT

(11) **EP 4 116 778 B1**
(45) Veröffentlichungstag und Bekanntmachung des Hinweises auf die Patenterteilung: **17.06.2026**
(21) Anmeldenummer: 22183856.8
(22) Anmeldetag: 08.07.2022
(51) Int. Cl.: G03H 1/18, G03H 1/00, G03H 1/02, G03H 1/22, G11B 7/006, G11B 7/0055

(54) **VERFAHREN ZUM HERSTELLEN EINES SICHERHEITSELEMENTS FÜR EIN SICHERHEITSDOKUMENT, VERFAHREN ZUM HERSTELLEN EINES SICHERHEITSDOKUMENTS, VERFAHREN ZUM PERSONALISIEREN EINES SICHERHEITSDOKUMENTS, SICHERHEITSELEMENT FÜR EIN SICHERHEITSDOKUMENT, SICHERHEITSDOKUMENT UND ID-DOKUMENT**
METHOD FOR PRODUCING A SECURITY ELEMENT FOR A SECURITY DOCUMENT, METHOD FOR PRODUCING A SECURITY DOCUMENT, METHOD FOR PERSONALISING A SECURITY DOCUMENT, SECURITY ELEMENT FOR A SECURITY DOCUMENT, SECURITY DOCUMENT AND ID DOCUMENT
PROCEDE DE FABRICATION D'UN ELEMENT DE SECURITE POUR UN DOCUMENT DE SECURITE, PROCEDE DE FABRICATION D'UN DOCUMENT DE SECURITE, PROCEDE DE PERSONNALISATION D'UN DOCUMENT DE SECURITE, ELEMENT DE SECURITE POUR UN DOCUMENT DE SECURITE, DOCUMENT DE SECURITE ET DOCUMENT D'IDENTIFICATION

(30) Priorität: 08.07.2021 DE 102021117699
(43) Veröffentlichungstag der Anmeldung: 11.01.2023
(73) Patentinhaber: Bundesdruckerei GmbH, 10969 Berlin (DE)
(72) Erfinder: Bielesch, Dr. Ulrich, 56132 Frücht (DE); Rötzer, Martin, 85229 Markt Indersdorf (DE); Mauderer, Dr. Michael, 81825 München (DE)
(74) Vertreter: Bittner, Thomas L.

(56) Entgegenhaltungen:
- DE-A1- 102005 055 123
- DE-A1- 102007 052 951
- DE-A1- 102018 106 430
- US-A1- 2007 024 939

## Beschreibung

Die Erfindung betrifft ein Verfahren zum Herstellen eines Sicherheitselements für ein Sicherheitsdokument, ein Verfahren zum Herstellen eines Sicherheitsdokuments sowie ein Verfahren zum Personalisieren eines Sicherheitsdokuments. Weiterhin betrifft die Erfindung ein Sicherheitselement für ein Sicherheitsdokument, ein Sicherheitsdokument sowie ein ID-Dokument.

### Hintergrund

Sicherheitselemente dienen dazu, diese beim Prüfen eines Sicherheitsdokuments auszuwerten, um so insbesondere die Gültigkeit des Sicherheitsdokuments nachzuprüfen. Handelt es sich bei dem Sicherheitsdokument um ein einer Person zugeordnetes oder für die Person personalisiertes Dokument (ID-Dokument), ermöglicht dies eine Identifizierung der Person. Sicherheitselemente sind in verschiedenen Ausführungsformen als solche bekannt. Ein Sicherheitsdokument kann mit einem oder mehreren Sicherheitsmerkmalen ausgeführt sein. Hierzu gehören zum Beispiel Hologramme, die in eine Hologrammschicht in dem Sicherheitselement hergestellt sind. Das Sicherheitselement mit der Hologrammschicht kann in ein Sicherheitsdokument integriert sein, derart, dass beim Prüfen des Sicherheitsdokuments das das Hologramm enthaltende Sicherheitselement ausgewertet wird.

Im Dokument WO 2017 / 109 119 A1 ist ein Verfahren zum Integrieren eines Hologramms in einen Sicherheitsdokumentkörper offenbart, welcher einen Laminatkörper aufweist, wobei das Verfahren die folgenden Schritte aufweist: Bereitstellen eines Hologrammfilms mit einer Trägersubstratschicht und einer Fotoschicht, Bereitstellen weiterer Substratschichten, Ausführen einer Lamination zum Ausbilden des Laminationskörpers, wobei der Hologrammfilm gemeinsam mit den weiteren Substratschichten zu einem Substratschichtenstapel zusammengetragen und gemeinsam mit den weiteren Substratschichten in einem Laminationsverfahren zu dem Laminationskörper zusammengefügt wird

Dokument DE 10 2007 042 386 A1 offenbart ein Verfahren und eine Vorrichtung zum Herstellen farbiger individualisierter Hologramme, die als Sicherheitselemente für Sicherheits- und / oder Wertdokumente verwendet werden. Bei dem Verfahren ist vorgesehen, dass Licht mehrerer unterschiedlicher Farben erzeugt wird, das Licht farbgetrennt individuell räumlich moduliert wird, das modulierte Licht optisch so geführt wird, dass das Licht an einem holografischen Master zumindest teilweise gebeugt und / oder reflektiert wird und in dem einem holografischen Aufzeichnungsmaterial so mit dem modulierten nicht gebeugten und / oder reflektierten Licht überlagert wird und das mehrfarbige individualisierte Hologramm aufgenommen wird, wobei das Licht mittels mehrerer Spatial Light Modulatoren farbgetrenntzeitgleich moduliert wird. Jede der mehreren Farben ist ein eigener Spatial Light Modulator zugeordnet, und die mehreren einfarbig modulierten Lichtstrahlen der mehreren Farben werden vor dem Beugen und / oder Reflektieren an dem holografischen Master und dem Überlagern in dem holografischen Aufzeichnungsmaterial zu einem mehrfarbigen farbgetrennt individuell modulierten Belichtungslichtstrahl kollinear zusammengeführt, so dass jedem der Pixel des individualisierten Hologramms genau eine der mehreren Farben zugeordnet ist.

Ein Hologramm und ein Sicherheitsdokument mit Farbmuster unterschiedlicher Spektralfarben sind im Dokument EP 2 738 624 B1 offenbart.

Dokument EP 3 552 837 A1 offenbart ein Sicherheitsdokument, das aus einer Anzahl an Schichten aufgebaut ist. Mindestens eine Schicht umfasst ein Sicherheitselement, das eine Struktur aufweist, welche Strukturelemente mit Abmessungen von weniger als 200 Mikrometern umfasst. Die Strukturelemente sind als Bohrungen ausgestaltet. Ferner umfasst die Struktur individualisierende Informationen zu einem Inhaber des Sicherheitsdokuments.

In dem Dokument DE 10 2005 055 123 A1 ist ein Verfahren zum Verbessern der Sicherheit eines Volumenhologramms durch Aufzeichnen individualisierter Informationen (z. B. biometrischer Muster) darin mittels Einstrahlen von Laserlicht in das Volumenhologramm, um dieses dadurch physikalisch oder chemisch zu modifizieren, offenbart. Es wird ein Lasermarkierungshologramm mit einer Volumenhologrammschicht offenbart, welche darin aufgezeichnete Interferenzstreifen enthält, wobei die Volumenhologrammschicht Informationen über bspw. biometrische Muster enthält, die darin mit einem Kontrast zwischen einem bestrahlten Abschnitt und einem nicht bestrahlten Abschnitt aufgezeichnet sind, wobei der Kontrast durch selektives Einstrahlen von Laserlicht in die Volumenhologrammschicht zum Modifizieren des bestrahlten Abschnitts bereitgestellt ist.

Das Dokument DE 10 2007 052 951 A1 betrifft ein Verfahren und eine Vorrichtung zum Herstellen eines Hologramms als Sicherheitsmerkmal sowie ein Hologramm und ein Sicherheitsdokument mit einem solchen Hologramm. Es wird ein Hologramm vorgeschlagen, welches vorzugsweise individualisiert ist und aus mit unterschiedlichen spektralen Farben hergestellten nebeneinander angeordneten Teilhologrammen zusammengesetzt ist.

Dokument US 2007 / 024 939 A1 offenbart eine Vorrichtung und ein Verfahren zur Massenproduktion von Reflexionshologrammen. Lichtempfindliches Material wird über ein zu kopierendes Objekt gezogen und kohärente Strahlung wird über das Material und das Objekt geführt. Das Objekt kann eine Komponente umfassen, die variabel ist, wie z. B. einen Zähler oder ein Hologramm. Das belichtete lichtempfindliche Material wird von dem Objekt entfernt, die Symbole auf dem Objekt werden, falls gewünscht, geändert, frisches Material wird an seinen Platz gebracht und ein neues Hologramm wird erzeugt. Die Hologramme der vorliegenden Erfindung haben vorzugsweise die Fähigkeit, sequenziell oder einzeln nummeriert oder anderweitig mit einer Vielzahl von Symbolen, zum Beispiel für Sicherheitszwecke, individuell angepasst zu werden.

Dokument DE 10 2018 106 430 A1 offenbart ein Sicherheitselement zur Verwendung als eine Schicht für ein Sicherheitsdokument, wobei das Sicherheitselement eine Struktur aufweist, die Strukturelemente mit Abständen von weniger als 200µm, vorzugsweise zwischen 100nm und 50µm, umfasst. Die Strukturelemente können innerhalb einer Hologrammfolie ausgebildet sein, zum Beispiel mittels Laserbohrungen.

### Zusammenfassung

Aufgabe der Erfindung ist es, in Verbindung mit Sicherheitselementen für Sicherheitsdokumente und im Zusammenhang mit Sicherheitsdokumenten die Sicherheit weiter zu erhöhen, indem ein verbessertes Sicherheitselement geschaffen wird.

Zur Lösung ist ein Verfahren zum Herstellen eines Sicherheitselements für ein Sicherheitsdokument nach dem unabhängigen Anspruch 1 geschaffen. Die unabhängigen Ansprüche 12 und 13 beziehen sich auf ein Verfahren zum Herstellen eines Sicherheitsdokuments mit dem Sicherheitselement sowie ein Verfahren zum Personalisieren eines Sicherheitsdokuments. Weiterhin sind ein Sicherheitselement für ein Sicherheitsdokument, ein Sicherheitsdokument sowie ein ID-Dokument nach den nebengeordneten Ansprüchen 14 bis 16 geschaffen. Ausgestaltungen sind Gegenstand von abhängigen Unteransprüchen.

Nach einem Aspekt ist ein Verfahren zum Herstellen eines Sicherheitselements für ein Sicherheitsdokument geschaffen, bei dem Folgendes vorgesehen ist: Bereitstellen einer Hologrammschicht; Herstellen eines Hologramms in der Hologrammschicht, wobei hierbei Lichteinstrahlung auf die Hologrammschicht eingestrahlt wird und das hergestellte Hologramm beim Betrachten der Hologrammschicht in einem Blickwinkel sichtbar ist; und Erzeugen von Fehlstellen in dem Hologramm, wobei hierbei das Hologramm in der Hologrammschicht mittels Einstrahlen von gepulsten Lichtstrahlen lokal gestört wird und die Fehlstellen beim Betrachten der Hologrammschicht in dem Blickwinkel sichtbar sind.

Nach einem weiteren Aspekt ist ein Verfahren zum Herstellen eines Sicherheitsdokuments mit dem Sicherheitselement geschaffen, wobei ein Dokumentkörper des Sicherheitsdokuments mit einem Stapel von Schichten gebildet wird und das Sicherheitselement mit einem Hologramm und Hologramm-Fehlstellen in dem Stapel von Schichten angeordnet wird.

Nach einem anderen Aspekt ist ein Verfahren zum Personalisieren eines Sicherheitsdokuments geschaffen, wobei auf dem Dokumentkörper des Sicherheitsdokuments Informationen betreffend Fehlstellen in einem Hologramm maschinenlesbar gespeichert werden.

Nach einem Aspekt ist ein Sicherheitselement für ein Sicherheitsdokument geschaffen, welches Folgendes aufweist: eine Hologrammschicht; ein Hologramm, welches in der Hologrammschicht hergestellt und beim Betrachten der Hologrammschicht in einem Blickwinkel sichtbar ist; und Fehlstellen in dem Hologramm, die beim Betrachten der Hologrammschicht in dem Blickwinkel sichtbar sind.

Nach weiteren Aspekten sind ein Sicherheitsdokument mit einem Sicherheitselement sowie ein ID-Dokument geschaffen. Bei dem Sicherheitsdokument ist ein Dokumentkörper mit einem Stapel von Schichten gebildet, und das Sicherheitselement mit dem Hologramm und Fehlstellen in dem Hologramm ist in dem Stapel von Schichten angeordnet. Bei dem ID-Dokument sind auf dem Dokumentkörper Informationen betreffend die Fehlstellen in dem Hologramm maschinenlesbar gespeichert.

Zur weiteren Verbesserung der Sicherheit bei Sicherheitselementen sowie Sicherheitsdokumenten mit solchen Sicherheitselementen ist vorgesehen, ein zuvor eingebrachtes Hologramm in einer Hologrammschicht nachträglich mit Fehl- oder Markierungsstellen zu versehen, derart, dass mittels Einstrahlen von gepulsten Lichtstrahlen das Hologramm lokal gestört wird, um so (lokale) Fehlstellen zu erzeugen. Beim Betrachten der Hologrammschicht mit dem Hologramm und den Fehlstellen sind Hologramm und Fehlstellen in mindestens einem Blick- oder Betrachtungswinkel gemeinsam sichtbar. Mit dem gezielten Einbringen der Fehlstellen in den vom Hologramm in der Holgrammschicht erfassten Bereich wird in Ergänzung zu dem Sicherheitsmerkmal, welches mit dem Hologramm gebildet ist, ein weiteres Sicherheitsmerkmal in der Hologrammschicht bereitgestellt.

Das Hologramm kann beim Erzeugen der Fehlstellen im Bereich der Fehlstellen lokal zumindest teilweise beseitigt werden. Bei dieser Fehlstellenausbildung wird das Hologramm lokal im Bereich der Fehlstelle nachträglich zumindest teilweise wieder entfernt oder beseitigt. Hierbei wird das Material der Hologrammschicht lokal verändert, so dass der zuvor hier ausgebildete Teil des Hologramms nicht mehr sichtbar ist. Die eingestrahlten gepulsten Lichtstrahlen wirken hierbei energieeintragend betreffend das Material der Hologrammschicht mit dem Hologramm, sei es mittels optischer und / oder thermischer Bearbeitung, um die lokale Materialveränderung zu bewirken.

Das Hologramm kann beim Erzeugen der Fehlstellen im Bereich der Fehlstellen im Vergleich zum (zuvor) hergestellten Hologramm lokal verändert werden. Bei dieser Fehlstellenausbildung wird ein lokales Erscheinungsbild des Hologramms mittels der Einstrahlung der gepulsten Lichtstrahlen verändert, ohne beseitigt zu werden.

Beim Erzeugen der Fehlstellen können auf die Hologrammschicht mit dem Hologramm ultrakurze Lichtimpulse eingestrahlt werden. Die ultrakurzen Lichtimpulse können ps- und / oder fs-Lichtimpulse umfassen. Zum Beispiel kann mit einer zeitlichen Pulsdauer von weniger als 10ps, insbesondere weniger als 1ps oder weniger als 500fs gearbeitet werden. Die gepulsten Lichtstrahlen sind vorzugsweise Laserstrahlen.

Die Wellenlänge der gepulsten Lichtstrahlen kann gleich einer Wellenlänge der Lichtstrahlen sein, die zum Einschreiben des Hologramms in die Hologrammschicht verwendet wurde. Alternativ kann das Licht für die gepulsten Lichtstrahlen einer Wellenlänge aufweisen, die von der Wellenlänge der Lichteinstrahlung beim Herstellen des Hologramms verschieden ist.

Beim Erzeugen der Fehlstellen können auf die Hologrammschicht mit dem Hologramm gepulsten UV-Lichtstrahlen eingestrahlt werden. Alternativ oder ergänzend zum UV-Licht kann Licht anderer Wellenlänge verwendet werden, wenn das Licht solcher Wellenlänge geeignet ist, die Hologrammschicht zum Ausbilden der Fehlstellen optisch und / oder thermisch zu bearbeiten.

Die Hologrammschicht kann mit einer Hologrammfolie und / oder einem Film bereitgestellt werden. Bei dieser oder anderen Ausführungsformen kann die Hologrammschicht mit einer Fotoschicht gebildet sein, in die das Hologramm mittels des Belichtungsprozesses einspeicherbar ist, wobei nach der Belichtung und einer Fixierung das Hologramm gespeichert ist. Im unbelichteten Zustand kann die Fotoschicht beispielsweise als Emulsion ausgebildet sein, welche ein Fotopolymer aufweist. Andere Ausführungsformen können eine Emulsion auf Gelatinebasis umfassen, welche in einer Ausgestaltung ein Silberhalogenid umfassen kann. Hologrammfolien und / oder Filme sind als solche in weiteren Ausführungsformen bekannt. Die Hologrammfolie kann beispielsweise auf Basis eines Polycarbonats hergestellt sein.

Die Hologrammschicht kann auf einer Substratschicht angeordnet werden. Mit der Substratschicht kann eine Trägerschicht gebildet sein, zum Beispiel zum Aufnehmen der Fotoschicht.

Beim Herstellen des Hologramms in der Hologrammschicht kann die Hologrammschicht ausgehärtet werden, und die Fehlstellen können in dem Hologramm vor, während und / oder nach dem Aushärten erzeugt werden. Das Aushärten der Hologrammschicht, beispielsweise der Fotoschicht aus einer Emulsion, kann mittels thermischer und / oder optischer Bearbeitung, allgemein energieeintragend, ausgeführt werden. In einer Ausgestaltung kann eine UV-Lichtbestrahlung verwendet werden, um das Material der Hologrammschicht auszuhärten. Das Einstrahlen der gepulsten Lichtstrahlen zum Erzeugen der Fehlstellen im Bereich des Hologramms kann vor, während und / oder nach dem Aushärten ausgeführt werden.

Auf der Hologrammschicht kann eine Schutzschicht ausgebildet werden. Das Ausbilden der Schutzschicht auf der Hologrammschicht kann vor oder nach dem Herstellen des Hologramms ausgeführt werden. Die Fehlstellen können vor und / oder nach dem Herstellen der Schutzschicht auf der Hologrammschicht erzeugt werden. Die Schutzschicht kann eine aushärtbare Schutzschicht sein, die flächig über die Hologrammschicht ausgebildet ist. Mittels Energieeintrag hinsichtlich ihrer chemischen und / oder physikalischen Struktur kann die aushärtbare Schutzschicht so verändert werden, dass diese eine größere Festigkeit nach dem Energieeintrag aufweist. Zum Beispiel umfasst eine solche Schutzschicht Prepolymere, Monomere und / oder Oligomere oder Polymere, welche aufgrund der Energieeinwirkung zu einer höheren Polymerisationsstufe und / oder Vernetzung derselben veranlasst werden.

Beim Erzeugen der Fehlstellen können personalisierte Fehlstellen in dem Hologramm hergestellt werden. Bei dieser Ausführungsform sind die Fehlstellen Teil einer Personalisierung des Sicherheitselements bzw. eines Sicherheitsdokuments, welches das Sicherheitselement aufweist. Die Fehlstellen sind dann Träger einer personalisierten oder personenspezifischen Information. Die personalisierten Fehlstellen können eine personenspezifische Anordnung von Fehlstellen aufweisen. Alternativ oder ergänzend kann die flächige Ausformung der Fehlstellen personenbezogen individualisiert werden. Auf diese Weise ist das Sicherheitselement für ein Sicherheitsdokument in Form eines ID-Dokuments geeignet, um dieses (zusätzlich) zu personalisieren, also für eine Person zu individualisieren.

Das Verfahren zum Herstellen eines Sicherheitsdokuments mit dem Sicherheitselement kann die vorangehend in Verbindung mit dem Verfahren zum Herstellen des Sicherheitselements beschriebenen Schritte einzeln oder in beliebiger Kombination als Teil des Herstellungsprozesses für das Sicherheitsdokument umfassen. Das Einbringen der Fehlstellen in dem zuvor erzeugten Hologramm kann zu beliebigen Zeitpunkten beim Ausbilden des Dokumentkörpers mit dem Stapel von Schichten erfolgen, beispielsweise vor und / oder nach einem Laminationsprozess für die Schichten des Stapels.

Das Erzeugen der Fehlstellen kann Teil des Verfahrens zum Personalisieren eines Sicherheitsdokuments sein, bei dem der zuvor hergestellte Dokumentkörper mittels Einstrahlen der gepulsten Lichtstrahlen zum Herstellen der Fehlstellen bearbeitet wird, insbesondere zum Herstellen der personalisierten Fehlstellen oder einer personalisierten Fehlstellenanordnung.

Die vorangehend beschriebenen Ausgestaltungen können einzeln oder in beliebiger Kombination in Verbindung mit dem Sicherheitselement für das Sicherheitsdokument, dem Sicherheitsdokument und / oder dem ID-Dokument entsprechend vorgesehen sein.

Die lokal ausgebildeten Fehlstellen weisen einen Durchmesser zwischen 10 µm und 100 µm auf. Ein Rasterabstand zwischen benachbarten Fehlstellen kann abhängig von einer gewünschten Art der Darstellung gewählt werden und beträgt zwischen 130 µm (etwa 200 dpi) und 21 µm (etwa 1200 dpi). Die Variation des Rasterabstands in Abhängigkeit von darzustellenden Grauwerten ermöglicht beispielweise die Darstellung von Graustufenbildern (Dithering) und eignet sich zum Beispiel für die Darstellung von Gesichtsbildern.

Beispiele für Sicherheitsdokumente sind Personalausweise, Reisepässe, Führerscheine, ID-Karten, Zugangskontrollausweise, Visa, Steuerzeichen, Tickets, Kraftfahrzeugpapiere, Banknoten, Schecks, Postwertzeichen, Kreditkarten, beliebige Chipkarten und Haftetiketten.

Das Hologramm und die Fehlstellen können bei Betrachtung unter einem spitzen Blick- oder Betrachtungswinkel sichtbar sein.

Die Fehlstellen sind nicht-reversibel hergestellt, was die Fälschungssicherheit unterstützt.

Es kann vorgesehen sein, die Fehlstellen so auszubilden, dass diese mit bloßem Auge zumindest unter einem Blickwinkel sichtbar sind. Alternativ können einzelne oder alle Fehlstellen mit bloßem Auge nicht sichtbar sein, aber bei Betrachtung mit einer Vergrößerungsoptik.

Das Hologramm kann als ein Volumenhologramm in dem Volumenmaterial der Hologrammschicht gespeichert sein. Eine Ausgestaltung als sogenanntes Volumenreflexionshologramm, welches für eine Rekonstruktion des Hologramms in einer reflektierenden Geometrie vorgesehen ist, kann vorgesehen sein. Hierbei erfolgt eine Beleuchtung mit einem Rekonstruktionslicht von derselben Seite des Hologramms wie die Betrachtung des rekonstruierten Hologramms. Alternativ kann ein Oberflächenhologramm, welches auch als dünnes Hologramm bezeichnet wird, in der Hologrammschicht ausgebildet sein. Ist das Sicherheitsdokument mit dem integrierten Sicherheitselement zumindest in Teilbereichen transparent, kann auch ein Volumentransmissionshologramm vorgesehen sein.

Regelmäßig dient das Hologramm zur Absicherung des Sicherheitsdokuments gegenüber Fälschung und Nachahmung sowie zur Absicherung darin gespeicherter Informationen, beispielsweise von Gesichtsbildern, anderen biometrischen Daten, aber auch Informationen wie Name oder Geburtsdatum.

Das Hologramm kann bei dem Sicherheitsdokument eine Teilfläche des Sicherheitsdokuments erfassend oder dieses im Wesentlichen vollflächig erfassend ausgebildet sein.

### Beschreibung von Ausführungsbeispielen

Nachfolgend werden weitere Ausführungsbeispiele unter Bezugnahme auf eine Figur erläutert.

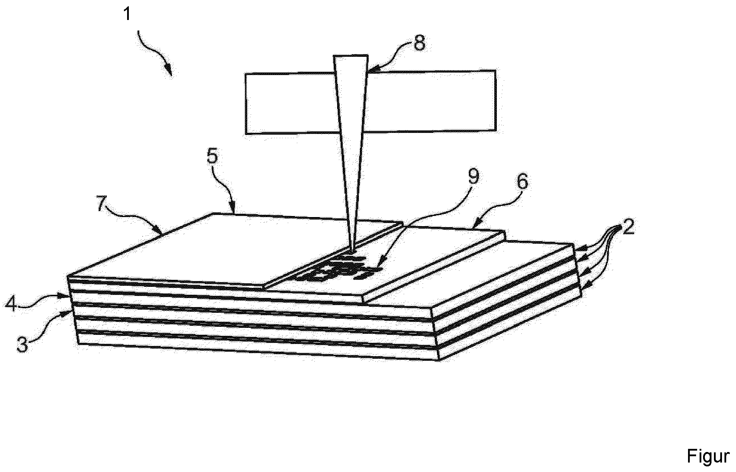

Die einzige Figur zeigt eine schematische perspektivische Darstellung eines Teilabschnitts eines Dokumentkörpers 1 eines Sicherheitsdokuments. Der Dokumentkörper 1 ist mit einem Stapel von Schichten 2 gebildet, die mittels Laminieren miteinander verbunden sind. Beispielsweise kann vorgesehen sein, dass der Dokumentkörper 1 mittels einer Heiß-Kalt-Laminierpresse hergestellt wird. Als Materialien für die Schichten 2 kann zum Beispiel Polycarbonat verwendet werden.

Bei dem beispielhaften Aufbau in der Figur ist im Stapel von Schichten 2 eine Träger- oder Substratfolie 3 vorgesehen, auf welcher eine optisch sensitive, insbesondere Laser sensitive Folienschicht 4 angeordnet ist. In die optisch sensitive Folienschicht 4 können mittels Schwärzung lasergenierte Informationen eingeschrieben werden, beispielsweise in Form einer Beschriftung, die von einer Dokumentenoberseite 5 sichtbar sind. Hierbei kann in einer Ausführungsform infrarotes Laserlicht verwendet werden. Alternativ kann die optisch sensitive Folienschicht 4 entfallen.

Ebenfalls von der Dokumentenoberseite 5 her sichtbar ist eine in der Regel personalisierte Bedruckung, welche auf der optisch sensitiven Folienschicht 4 aufgebracht ist. Diese wird mittels einer auf die Oberseite des Dokumentkörpers 1 aufgebrachte belichtete Hologrammschicht 6 vor Verfremdung oder Fälschung geschützt, wobei die Hologrammschicht 6 zum Beispiel mittels einer Hologrammfolie gebildet sein kann und mittels einer Schutzschicht 7, beispielweise einer Lackschicht, vor Beschädigung, Abrieb und Manipulation geschützt ist. Durch die geeignete Belichtung der Hologrammschicht 6 mit kohärenter Laserstrahlung werden "holographische" Strukturen (Hologramm, insbesondere Volumenhologramm) in die Hologrammschicht 6 eingebracht, welche bei geeignetem Belichtungs- und Blickwinkel aufgrund der Bragg-Bedingung ein zuvor einbelichtetes Bild zeigen.

Durch die Verwendung eines Laserstrahls 8 mit geeigneter Wellenlänge, Intensität und vorzugsweise ultrakurzen Laserimpulsen wird das eingebrachte Hologramm gezielt zerstört, indem so ein oder mehrere Fehlstellen 9 ausgebildet werden. Auf diese Weise kann individualisierte oder personalisierte Information mit hoher Auflösung, zum Beispiel im Mikrometerbereich, in dem Dokumentkörper 1 eingebracht werden.

Das Ausbilden der Fehlstellen 9 erfolgt nachdem zuvor das Hologramm hergestellt wurde, entweder unmittelbar danach oder in zeitlichem Abstand hierzu, zum Beispiel bei einem ansonsten fertigen Sicherheitsdokument, beispielweise im Rahmen einer Personalisierung. Hierbei bleiben die darüber liegende Schutzschicht 7 und die darunterliegende optisch sensitive Folienschicht 4 unbearbeitet. Die Zerstörung des einbelichteten Hologramms zum Ausbilden der Fehlstellen 9 ist nicht reversibel und somit nicht manipulierbar.

Die in der vorstehenden Beschreibung, den Ansprüchen sowie der Figur offenbarten Merkmale können sowohl einzeln als auch in beliebiger Kombination für die Verwirklichung der verschiedenen Ausführungen von Bedeutung sein.

### Bezugszeichenliste

- 1: Dokumentkörper
- 2: Stapel von Schichten
- 3: Trägerfolie
- 4: optisch sensitive Folienschicht
- 5: Dokumentenoberseite
- 6: Hologrammschicht
- 7: Schutzschicht
- 8: Laserstrahl
- 9: Fehlstellen

## Patentansprüche

1. Verfahren zum Herstellen eines Sicherheitselements für ein Sicherheitsdokument, mit
- Bereitstellen einer Hologrammschicht (6);
- Herstellen eines Hologramms in der Hologrammschicht (6), wobei hierbei Lichteinstrahlung auf die Hologrammschicht (6) eingestrahlt wird und das hergestellte Hologramm beim Betrachten der Hologrammschicht (6) in einem Blickwinkel sichtbar ist; und
- Erzeugen von Fehlstellen (9) in dem Hologramm, wobei hierbei das Hologramm in der Hologrammschicht (6) mittels Einstrahlen von gepulsten Lichtstrahlen lokal gestört wird und die Fehlstellen (9) beim Betrachten der Hologrammschicht (6) in dem Blickwinkel sichtbar sind;
**dadurch gekennzeichnet, dass** ein Rasterabstand zwischen benachbarten Fehlstellen (9) zwischen 21 µm und 130 µm und ein Durchmesser der Fehlstellen zwischen 10 µm und 100 µm beträgt und mittels der Fehlstellen (9) ein Graustufenbild mit einer Variation des Rasterabstands in Abhängigkeit von darzustellenden Grauwerten gebildet ist.

2. Verfahren nach Anspruch 1, **dadurch gekennzeichnet, dass** das Hologramm beim Erzeugen der Fehlstellen (9) im Bereich der Fehlstellen (9) lokal zumindest teilweise beseitigt wird.

3. Verfahren nach Anspruch 1 oder 2, **dadurch gekennzeichnet, dass** das Hologramm beim Erzeugen der Fehlstellen (9) im Bereich der Fehlstellen (9) im Vergleich zum hergestellten Hologramm lokal verändert wird.

4. Verfahren nach einem der vorangehenden Ansprüche, **dadurch gekennzeichnet, dass** beim Erzeugen der Fehlstellen (9) auf die Hologrammschicht (6) mit dem Hologramm ultrakurze Lichtimpulse eingestrahlt werden.

5. Verfahren nach einem der vorangehenden Ansprüche, **dadurch gekennzeichnet, dass** beim Erzeugen der Fehlstellen (9) auf die Hologrammschicht (6) mit dem Hologramm gepulsten UV-Lichtstrahlen eingestrahlt werden.

6. Verfahren nach einem der vorangehenden Ansprüche, **dadurch gekennzeichnet, dass** die Hologrammschicht (6) mit einer Hologrammfolie und / oder einem Film bereitgestellt wird.

7. Verfahren nach einem der vorangehenden Ansprüche, **dadurch gekennzeichnet, dass** die Hologrammschicht (6) auf einer Substratschicht (3) angeordnet wird.

8. Verfahren nach einem der vorangehenden Ansprüche, **dadurch gekennzeichnet, dass** beim Herstellen des Hologramms die Hologrammschicht (6) ausgehärtet wird und die Fehlstellen (9) in dem Hologramm vor, während und / oder nach dem Aushärten erzeugt werden.

9. Verfahren nach einem der vorangehenden Ansprüche, **dadurch gekennzeichnet, dass** auf der Hologrammschicht (6) eine Schutzschicht ausgebildet wird.

10. Verfahren nach einem der vorangehenden Ansprüche, **dadurch gekennzeichnet, dass** beim Erzeugen der Fehlstellen (9) personalisierte Fehlstellen in dem Hologramm hergestellt werden.

11. Verfahren nach einem der vorangehenden Ansprüche, **dadurch gekennzeichnet, dass** das Hologramm als Volumenhologramm hergestellt wird.

12. Verfahren zum Herstellen eines Sicherheitsdokuments mit einem Sicherheitselement hergestellt gemäß dem Verfahren nach einem der vorangehenden Ansprüche, wobei ein Dokumentkörper (1) mit einem Stapel von Schichten gebildet wird und das Sicherheitselement mit dem Hologramm und den Fehlstellen (9) in dem Stapel von Schichten (2) angeordnet wird.

13. Verfahren zum Personalisieren eines Sicherheitsdokuments hergestellt gemäß dem Verfahren nach Anspruch 12, wobei
auf dem Dokumentkörper (1) Informationen betreffend die Fehlstellen (9) in dem Hologramm maschinenlesbar gespeichert werden.

14. Sicherheitselement für ein Sicherheitsdokument, mit
- einer Hologrammschicht (6);
- einem Hologramm, welches in der Hologrammschicht (6) hergestellt und beim Betrachten der Hologrammschicht (6) in einem Blickwinkel sichtbar ist; und
- Fehlstellen (9) in dem Hologramm, die beim Betrachten der Hologrammschicht (6) in dem Blickwinkel sichtbar sind;
**dadurch gekennzeichnet, dass** ein Rasterabstand zwischen benachbarten Fehlstellen (9) zwischen 21 µm und 130 µm und ein Durchmesser der Fehlstellen zwischen 10 µm und 100 µm beträgt und mittels der Fehlstellen (9) ein Graustufenbild mit einer Variation des Rasterabstands in Abhängigkeit von darzustellenden Grauwerten gebildet ist.

15. Sicherheitsdokument mit einem Sicherheitselement nach Anspruch 14, wobei ein Dokumentkörper (1) mit einem Stapel von Schichten (2) gebildet ist und das Sicherheitselement mit dem Hologramm und den Fehlstellen (9) in dem Stapel von Schichten (2) angeordnet ist.

16. ID-Dokument, welches mit einem Sicherheitsdokument nach Anspruch 15 gebildet ist, wobei auf dem Dokumentkörper Informationen betreffend die Fehlstellen (9) in dem Hologramm maschinenlesbar gespeichert sind.

## Claims

1. Method for producing a security element for a security document, comprising
- providing a hologram layer (6);
- producing a hologram in the hologram layer (6), wherein light irradiation is irradiated onto the hologram layer (6) and the produced hologram is visible when viewing the hologram layer (6) at a viewing angle; and
- generating defects (9) in the hologram, wherein the hologram in the hologram layer (6) is locally disturbed by irradiating pulsed light beams and the defects (9) are visible when viewing the hologram layer (6) at the viewing angle;
**characterized in that** a grid spacing between adjacent defects (9) is between 21 µm and 130 µm and a diameter of the defects is between 10 µm and 100 µm and a grayscale image with a variation of the grid spacing depending on gray values to be represented is formed by means of the defects (9).

2. Method according to claim 1, **characterized in that** the hologram is at least partially removed locally when generating the defects (9) in the region of the defects (9).

3. Method according to claim 1 or 2, **characterized in that** the hologram is changed locally when generating the defects (9) in the region of the defects (9) compared to the produced hologram.

4. Method according to one of the preceding claims, **characterized in that** ultrashort light pulses are irradiated onto the hologram layer (6) comprising the hologram when generating the defects (9).

5. Method according to one of the preceding claims, **characterized in that** pulsed UV light beams are irradiated onto the hologram layer (6) comprising the hologram when generating the defects (9).

6. Method according to one of the preceding claims, **characterized in that** the hologram layer (6) is provided with a hologram film and / or a film.

7. Method according to one of the preceding claims, **characterized in that** the hologram layer (6) is arranged on a substrate layer (3).

8. Method according to one of the preceding claims, **characterized in that** the hologram layer (6) is cured when producing the hologram and the defects (9) are generated in the hologram before, during and / or after curing.

9. Method according to one of the preceding claims, **characterized in that** a protective layer is formed on the hologram layer (6).

10. Method according to one of the preceding claims, **characterized in that** personalized defects are produced in the hologram when generating the defects (9).

11. Method according to one of the preceding claims, **characterized in that** the hologram is produced as a volume hologram.

12. Method for producing a security document comprising a security element produced according to the method of one of the preceding claims, wherein a document body (1) comprising a stack of layers is formed and the security element comprising the hologram and the defects (9) is arranged in the stack of layers (2).

13. Method for personalizing a security document produced according to the method of claim 12, wherein information relating to the defects (9) in the hologram is stored in a machine-readable manner on the document body (1).

14. Security element for a security document, comprising
- a hologram layer (6);
- a hologram which is produced in the hologram layer (6) and is visible when viewing the hologram layer (6) at a viewing angle; and
- defects (9) in the hologram which are visible when viewing the hologram layer (6) at the viewing angle;
**characterized in that** a grid spacing between adjacent defects (9) is between 21 µm and 130 µm and a diameter of the defects is between 10 µm and 100 µm and a grayscale image with a variation of the grid spacing depending on gray values to be represented is formed by means of the defects (9).

15. Security document comprising a security element according to claim 14, wherein a document body (1) comprising a stack of layers (2) is formed and the security element comprising the hologram and the defects (9) is arranged in the stack of layers (2).

16. ID document which is formed with a security document according to claim 15, wherein information relating to the defects (9) in the hologram is stored in a machine-readable manner on the document body.

## Revendications

1. Procédé de production d'un élément de sécurité pour un document de sécurité, comprenant :
- la fourniture d'une couche d'hologramme (6) ;
- la production d'un hologramme dans la couche d'hologramme (6), dans lequel à cette fin de la lumière est projetée sur la couche d'hologramme (6) et l'hologramme produit est visible sous un certain angle de vision lors de l'observation de la couche d'hologramme (6) ; et
- la création de défauts (9) dans l'hologramme, dans lequel à cette fin l'hologramme est perturbé localement par projection de faisceaux lumineux pulsés dans la couche d'hologramme (6) et les défauts (9) sont visibles sous un certain angle de vision lors de l'observation de la couche d'hologramme (6),
**caractérisé en ce que** un espacement de grille entre défauts adjacents (9) est compris entre 21 µm et 130 µm et un diamètre des défauts est compris entre 10 µm et 100 µm et une image en niveaux de gris est formée grâce aux défauts (9), l'espacement de grille variant selon les valeurs de gris à afficher.

2. Procédé selon la revendication 1, **caractérisé en ce que** l'hologramme est localement, au moins partiellement, éliminé dans la zone des défauts (9) lors de la génération des défauts (9).

3. Procédé selon la revendication 1 ou 2, **caractérisé en ce que** l'hologramme est localement modifié dans la zone des défauts (9) lors de la génération des défauts (9), comparé à l'hologramme produit.

4. Procédé selon une des revendications précédentes, **caractérisé en ce que** des impulsions lumineuses ultracourtes sont projetées sur la couche d'hologramme (6) contenant l'hologramme lors de la création des défauts (9).

5. Procédé selon une des revendications précédentes, **caractérisé en ce que** des faisceaux de lumière UV pulsés sont projetés sur la couche d'hologramme (6) contenant l'hologramme lors de la création des défauts (9).

6. Procédé selon une des revendications précédentes, **caractérisé en ce que** la couche d'hologramme (6) est munie d'une feuille et/ou d'un film holographique.

7. Procédé selon une des revendications précédentes, **caractérisé en ce que** la couche d'hologramme (6) est disposée sur une couche de substrat (3).

8. Procédé selon une des revendications précédentes, **caractérisé en ce que** la couche d'hologramme (6) est polymérisée pendant la production de l'hologramme et que les défauts (9) dans l'hologramme sont créés avant, pendant et/ou après la polymérisation.

9. Procédé selon une des revendications précédentes, **caractérisé en ce qu'**une couche protectrice est formée sur la couche d'hologramme (6).

10. Procédé selon une des revendications précédentes, **caractérisé en ce que** des défauts personnalisés sont produits dans l'hologramme lors de la génération des défauts (9).

11. Procédé selon une des revendications précédentes, **caractérisé en ce que** l'hologramme est produit sous forme d'hologramme volumique.

12. Procédé de production d'un document de sécurité comportant un élément de sécurité produit selon le procédé d'une des revendications précédentes, dans lequel un corps de document (1) est formé d'un empilement de couches et l'élément de sécurité, comprenant l'hologramme et les défauts (9), est disposé dans l'empilement de couches (2).

13. Procédé de personnalisation d'un document de sécurité produit selon le procédé de la revendication 12, dans lequel les informations relatives aux défauts (9) dans l'hologramme sont stockées de manière lisible par machine sur le corps du document (1).

14. Élément de sécurité pour un document de sécurité, comprenant :
- une couche d'hologramme (6) ;
- un hologramme, qui est produit dans la couche d'hologramme (6) et est visible sous un certain angle de vision lors de l'observation de la couche d'hologramme (6) ;
- des défauts (9) dans l'hologramme, qui sont visibles lors de l'observation de la couche d'hologramme (6) sous un certain angle de vision ;
**caractérisé en ce que** un espacement de grille entre défauts adjacents (9) est compris entre 21 µm et 130 µm et un diamètre des défauts est compris entre 10 µm et 100 µm et une image en niveaux de gris est formée grâce aux défauts (9), l'espacement de grille variant selon les valeurs de gris à afficher.

15. Document de sécurité comportant un élément de sécurité selon la revendication 14, dans lequel un corps de document (1) est constitué d'un empilement de couches (2) et l'élément de sécurité, comprenant l'hologramme et les défauts (9), est disposé dans l'empilement de couches (2).

16. Document d'identité, qui est formé avec un document de sécurité selon la revendication 15, dans lequel les informations relatives aux défauts (9) dans l'hologramme sont stockées sous une forme lisible par machine sur le corps de document.
